# EUROPÄISCHE PATENTANMELDUNG

(11) **EP 1 787 888 A2**
(43) Veröffentlichungstag der Anmeldung: **23.05.2007**
(21) Anmeldenummer: 06022892.1
(22) Anmeldetag: 03.11.2006
(51) Int. Cl.: B62B 3/14

(54) **Transportwagen**

(30) Priorität: 21.11.2005 DE 202005018287 U
(71) Anmelder: Wanzl Metallwarenfabrik GmbH, 89336 Leipheim (DE)
(72) Erfinder: Boxler, Anton, 87772 Pfaffenhausen (DE)

(57) **Zusammenfassung**

Die Erfindung betrifft einen von Hand bewegbaren Transportwagen (1), mit einem Schiebegriff (2) und mit einem Gestell (3) und mit wenigstens einer Abstelleinrichtung (4) sowie mit einem Korb (5), wobei der Korb (5) im Bereich des Schiebegriffs (2) angeordnet ist und wobei das Gestell (3) im Bereich des Korbes (2) wenigstens eine Querverstrebung (6) vorgesehen ist und wobei am Transportwagen (1) ein Kindersitz (7) vorgesehen ist.

Die Erfindung zeichnet sich dadurch aus, dass die wenigstens eine Querverstrebung (6) zur Aufnahme eines Kindersitzes (7) dient und wobei der Kindersitz (7) Ösen (8) aufweist, die in der Form entsprechend zum lösbaren oder ortsfesten Anordnen an der wenigstens einen Querverstrebung (6) gebildet sind.

## Beschreibung

Die Erfindung betrifft einen Transportwagen mit den Merkmalen im Oberbegriff des Hauptanspruchs.

Zum Stand der Technik zählt ein Transportwagen, wie er in der deutschen Offenlegungsschrift DE 102 24 840 A1 beschrieben ist, mit einem Kindersitz, der in einem zusätzlichen Korb angeordnet ist, welcher im Bereich der Schiebeeinrichtung zur Aufnahme weiterer Waren vorgesehen ist. Bei dieser Art eines Kindersitzes, kann bei Nichtgebrauch des Kindersitzes die Sitzeinrichtung an die Außenwand geklappt werden und in Gebrauchslage die Sitzvorrichtung des Kindersitzes im Inneren des Korbes aufgeklappt werden und von einem Kleinkind belegt werden.

Es kommt jedoch vor, dass der Korb auch weiterhin genutzt werden möchte. Durch die Sitzeinrichtung des Kindersitzes ist hierbei jedoch das Volumen des Korbes erheblich verringert.

Die Aufgabe der Erfindung besteht darin, einen verbesserten Transportwagen mit Kindersitz aufzuzeigen.

Die Erfindung löst die Aufgabe mit den Merkmalen im Hauptanspruch.

Der wesentliche Vorteil liegt darin, dass das Volumen des Korbes vollständig genutzt werden kann.

Weiterhin stört ein solcher Kindersitz nicht beim Stapeln gleicher Wagen.

Auch lässt sich ein Kindersitz dieser Art nachträglich anbringen.

Ein Austausch ist einfach durchführbar, da der Kindersitz mittels Ösen eingehängt wird und falls notwendig mit Schrauben oder anderen Befestigungsmitteln gesichert wird.

Weitere Vorteile sind der Beschreibung zu entnehmen.

Die Erfindung wird anhand von Ausführungsbeispielen näher erläutert. Es zeigt
Fig. 1 einen Transportwagen in 3-D-Darstellung mit einem Kindersitz in Nichtgebrauchslage;

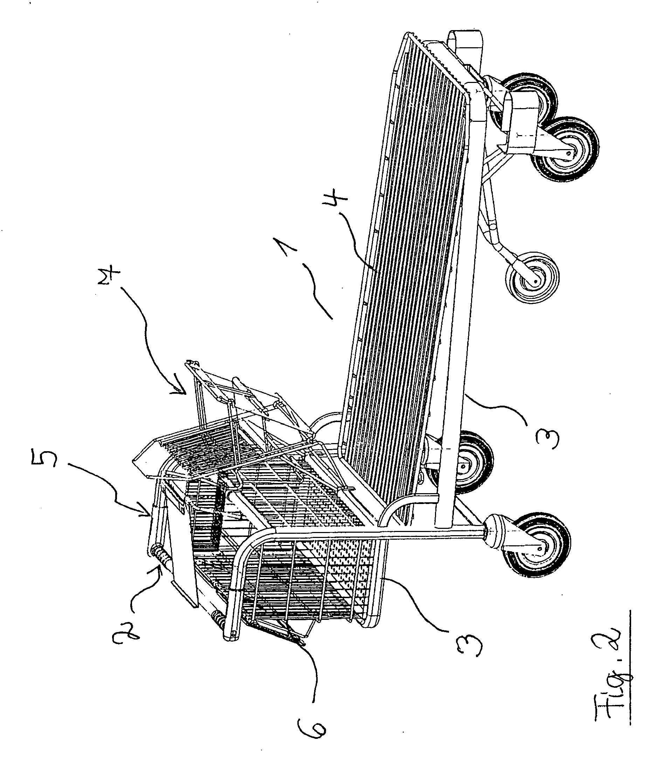

Fig. 2 den gleichen Transportwagen in 3-D-Darstellung mit einem Kindersitz in Gebrauchslage sowie
Fig. 3 einen Kindersitz.

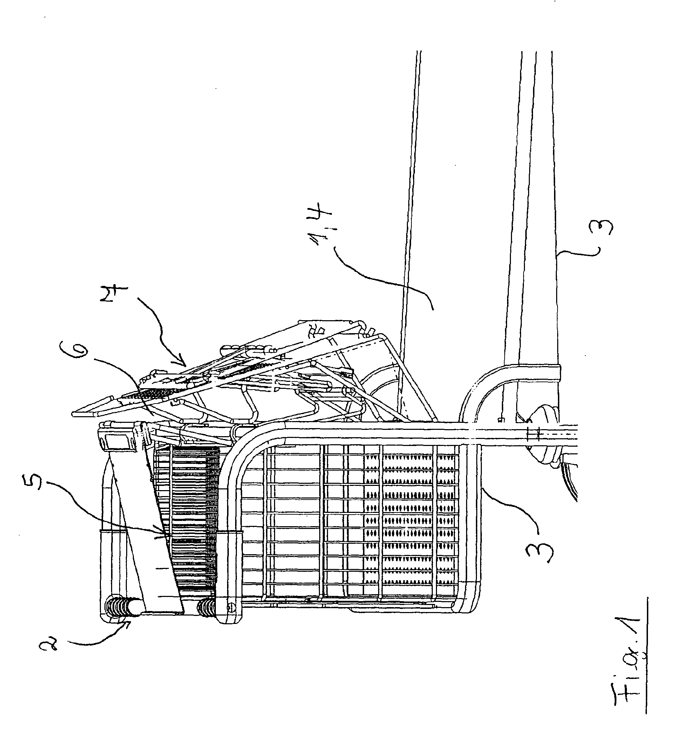

Fig. 1 zeigt einen Transportwagen 1, der per Hand mittels eines Schiebegriffs 2 beweglich ist. Der Transportwagen 1 weist ein Gestell 3 auf, an dem wenigstens eine Abstelleinrichtung 4 für nicht näher dargestellte Ware angeordnet ist. Die Abstelleinrichtung 4 kann eine Plattform sein, die aus Draht, Holz oder Kunststoff gefertigt ist. Vorzugsweise unterhalb des Schiebegriffs 2 ist ein Korb 5 angeordnet. Parallel zu dem Schiebegriff sind wenigstens eine, vorzugsweise zwei Querverstrebungen 6, ortsfest am Gestell 3 vorgesehen. Diese verleihen dem Gestell 3 Stabilität. An diesen Querverstrebungen 6 ist ortsfest oder lösbar ein Kindersitz 7 angeordnet. Hierbei weist der Kindersitz 7 Ösen 8 auf, die es ermöglichen, den Kindersitz 7 in einfacher Weise und auch nachträglich an die Querverstrebungen 6 zu hängen. Die Ösen 8 sind entsprechend dem Querschnitt der Querverstrebung 6 zu bilden. Für die Querverstrebungen 6 bietet sich vorzugsweise eine ovalförmige Bauweise an. Aber auch andere Bauarten sind denkbar.

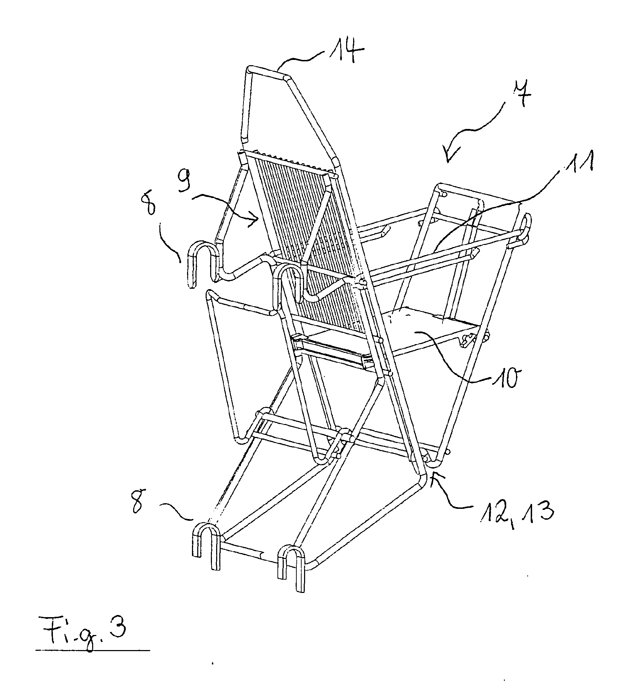

Jeder Kindersitz 7 weist zum Einhängen in die Querverstrebung 6 wenigstens zwei, vorzugsweise vier Ösen 8 auf. Ein Kindersitz ist in Fig. 3 dargestellt. Jeweils zwei davon sind auf gleicher Höhe an der Rückenlehne 9 des Kindersitzes 7 vorgesehen. Die Rückenlehne 9 kann verschiedenartig gestaltet sein, im vorliegenden Fall ist es ein Drahtgitter. Aber auch andere Ausführungsformen sind denkbar. Aufgrund der großen Fläche der Rückenlehne 9, besteht die Möglichkeit ein Schild z.B. für Werbung anzubringen.

Durch die Anordnung außerhalb des Korbbereiches des Kindersitzes 7 kann weiterhin am Kindersitz oder am Schiebegriff ein Halter für Einkaufszettel angeordnet werden.

Jeder Kindersitz 7 weist eine Sitzfläche 10 für das Kind auf. Diese ist vorzugsweise auf Kunststoff hergestellt. Weiterhin weist jeder Kindersitz 7 seitliche Begrenzungen 11 auf. Dadurch kann das Kind nicht aus dem Kindersitz 7 fallen und es kann sich weiterhin daran festhalten.

Um eine gute Stapelmöglichkeit zu geben, ist jeder Kindersitz 7 von einer Gebrauchslage in eine Nichtgebrauchslage zu bringen. Hierfür ist der Kindersitz 7 im unteren Bereich 12 um eine horizontale Achse 13 im unteren Bereich 12 des Kindersitzes 7 klappbar. Hierbei kann eine technische Lösung Anwendung finden, wie sie von Einkaufswagen mit Kindersitzen bekannt ist. Andere Lösungen bleiben dem Fachmann überlassen.

Durch die Anordnung des Kindersitzes 7 doch kann ein Kind in Fahrtrichtung blicken. Weiterhin kann der Korb 5 zum Ablegen weiterer Ware vollständig genutzt werden.

Gerade bei größeren Kindern ist weiterhin die Möglichkeit gegeben, dass sie sich mit ihren Füßen auf der Abstelleinrichtung 4 abstützen können.

Weiterhin weist der Kindersitz 7 einen Griff 14 auf, dieser erleichtert die Montage des Kindersitzes 7.

### Bezugszeichenliste

- 1: Transportwagen
- 2: Schiebegriff
- 3: Gestell
- 4: Abstelleinrichtung
- 5: Korb
- 6: Querverstrebung
- 7: Kindersitz
- 8: Ösen
- 9: Rückenlehne
- 10: Sitzfläche
- 11: seitliche Begrenzung
- 12: unteren Bereich
- 13: horizontale Achse
- 14: Griff

## Patentansprüche

1. Von Hand bewegbarer Transportwagen (1), mit einem Schiebegriff (2) und mit einem Gestell (3) und mit wenigstens einer Abstelleinrichtung (4) sowie mit einem Korb (5), wobei der Korb (5) im Bereich des Schiebegriffs (2) angeordnet ist und wobei das Gestell (3) im Bereich des Korbes (2) wenigstens eine Querverstrebung (6) vorgesehen ist und wobei am Transportwagen (1) ein Kindersitz (7) vorgesehen ist, **dadurch gekennzeichnet, dass** die wenigstens eine Querverstrebung (6) zur Aufnahme eines Kindersitzes (7) dient und wobei der Kindersitz (7) Ösen (8) aufweist, die in der Form entsprechend zum lösbaren oder ortsfesten Anordnen an der wenigstens einen Querverstrebung (6) gebildet sind.

2. Von Hand bewegbarer Transportwagen nach Anspruch 1, **dadurch gekennzeichnet, dass** jeder Kindersitz (7) außerhalb des Korbes (5) angeordnet ist.

3. Von Hand bewegbarer Transportwagen nach Anspruch 1 oder 2, **dadurch gekennzeichnet, dass** jeder Kindersitz (7) um eine horizontale Achse (13), die im unteren Bereich (12) und außerhalb des Korbes (5) angeordnet ist.

4. Von Hand bewegbarer Transportwagen nach einem der Ansprüche 1 bis 3, **dadurch gekennzeichnet, dass** jeder Kindersitz (7) von einer Nichtgebrauchslage in eine Gebrauchslage bewegbar ist.

5. Von Hand bewegbarer Transportwagen nach einem der Ansprüche 1 bis 4, **dadurch gekennzeichnet, dass** jeder Kindersitz (7) vorzugsweise einen Griff (14) aufweist.

6. Von Hand bewegbarer Transportwagen nach einem der Ansprüche 1 bis 5, **dadurch gekennzeichnet, dass** jeder Kindersitz (7) vorzugsweise vier Ösen (8) aufweist.
